# EUROPEAN PATENT APPLICATION

(11) **EP 4 015 488 A1**
(43) Date of publication of application: **22.06.2022**
(21) Application number: 20216179.0
(22) Date of filing: 21.12.2020
(51) Int. Cl.: C05B 7/00, C05C 1/02, C05C 3/00, C05G 3/90, C05G 5/12, C05G 5/30

(54) **METHOD FOR PRODUCING AN AMMONIUM-BASED SOLID, PARTICULATE COMPOSITION COMPRISING AN ADDITIVE**

(71) Applicant: Yara International ASA, 0277 Oslo (NO)
(72) Inventor: van Belzen, Ruud, NL-4541 HJ Sluiskil Terneuzen (NL); Colpaert, Filip, B-9052 Zwijnaarde (BE); van Elslande, Paul, NL-4541 HJ Sluiskil Terneuzen (NL)
(74) Representative: De Clercq & Partners

(57) **Abstract**

A method is disclosed for producing an ammonium-based solid, particulate composition comprising an additive in a plant comprising a liquid section and a solid section comprising a particulation unit and an effluent gas treatment unit comprising a scrubber, a scrubber solution storage container and optionally a scrubber evaporator, the method comprising the steps of:
(a) preparing a melt comprising an ammonium salt in the liquid section of the plant;
(b) particulating the melt prepared in step (a) in the particulation unit thereby obtaining an ammonium-based solid, particulate composition and an effluent gas comprising ammonia;
(c) preparing an aqueous scrubbing solution;
(d) treating the effluent gas comprising ammonia from the particulation unit with the aqueous scrubbing solution prepared in step (c) in the scrubber of the effluent gas treatment unit thereby producing a scrubber solution;
(e) storing the scrubber solution produced in step d) in the scrubber solution storage of the effluent gas treatment unit; and
(f) optionally, concentrating the scrubber solution from the scrubber solution storage container in the scrubber evaporator thereby obtaining a concentrated scrubber solution;
(g) adding the scrubber solution obtained from step e) or f) to the melt comprising an ammonium salt;
wherein an additive is added in solid form to any one or more of the aqueous scrubbing solution prepared in step c), the scrubber solution in the scrubber solution storage, or the scrubber concentrator.

## Description

### Field of the invention

This invention relates to a method for the manufacture of an ammonium-based solid, particulate composition comprising an ammonium salt and an additive, in particular a nitrification inhibitor for reducing the loss of nitrogen through leaching and denitrification, and/or stabilizers that may improve the stability of the nitrification inhibitor.

### Background of the invention

Nitrogen is a basic element for any living system as a constituent of protein. Soils contain nitrogen naturally, mostly in the form of nitrate (NO₃⁻), that crops can absorb to fuel their growth. However, the nitrogen content of soils is usually too low to ensure an optimal growth and yield, so farmers often supply additional nitrogen to crops in the form of fertilizer compositions. Nitrogen can be supplied in three main forms: urea, which cannot be absorbed directly by the crops, but needs to be decomposed by soil organisms, nitrate ions (NO₃⁻), which can be directly absorbed by the roots of crops, and ammonium ions (NH₄⁺). Ammonium may be absorbed directly by roots although at a much lower rate than nitrate ions. Ammonium groups may also be oxidized to nitrate in a two-stage process called nitrification: first, ammonium is converted to nitrite (NO₂⁻), and nitrite is converted to nitrate. This conversion is carried out by nitrifying organisms, for example *Nitrosomas* bacteria can perform the first step, and *Nitrobacter* the second step.

Ammonium ions are positively charged and therefore are easily fixed by negatively charged materials, such as clays, which are abundantly present in soils. It is said that ammonium ions have a low mobility in soils. On the other hand, negatively charged nitrate ions are not so well retained by soil components, and may leach from the soil, in particular in case of important precipitations. Furthermore, nitrate ions are prone to a denitrification process where nitrate ions are converted to nitrous oxide (N₂O), which is a gas with greenhouse effect and its emission into the atmosphere is not desirable.

When applying ammonium-based fertilizers to soils, there is a need a to regulate the conversion of ammonium into nitrate to avoid nitrogen losses due to nitrate leaching and avoid nitrous oxide emissions. Compounds that slow down the nitrification process, so-called nitrification inhibitors, have been developed and may be applied to soils at the same time as ammonium-based fertilizers. Alternatively, the nitrification inhibitors may be added directly to the fertilizer composition.
There are a limited number of compounds recognized commercially as nitrification inhibitors. Examples of nitrification inhibitors include, but are not limited to, dicyandiamide (DCD), 2-chloro-6-trichloromethylpyridine (nitrapyrin), dimethylpyrazole (DMP)-based compounds, such as 3,4-dimethylpyrazole phosphate (DMPP), 3,4-dimethylpyrazole-succinic acid (DMPSA), 3-methylpyrazole (MP); 1-H-1,2,4-triazole (TZ); 3-methylpyrazole-1-carboxamide (CMP); 4-amino-1,2,4-triazole (AT, ATC); 3-amino-1,2,4-triazole; 2-cyanimino-4-hydroxy-6- methylpyrimidine (CP); 2-ethylpyridine; ammonium thiosulfate (ATS); sodium thiosulfate (ST); thiophosphoryl triamide; thiourea (TU); guanylthiourea (GTU); ammonium polycarboxylate; ethylene urea; hydroquinone; phenylacetylene; phenylphosphoro diamidate; neemcake; calcium carbide; 5-ethoxy-3-trichloromethyl-1,2,4-thiadiazol (etridiazol; terraole); 2-amino-4-chloro-6- methylpyrimidine (AM); 1-mercapto-1,2,4-triazole (MT); 2-mercaptobenzothiazole (MBT); 2-sulfanilamidothiazole (ST); 5-amino-1,2,4-thiadiazole; 2,4-diamino-6-trichloromethyl-s-triazine (CL-1580); N-2,5-dichlorophenyl succinanilic acid (DCS); nitroaniline, and chloroaniline.

US4,582,524 (Lobitz, 1986) discloses the addition of solid DCD to a melt comprising ammonium sulphate and ammonium nitrate. However, adding a nitrification inhibitor to a melt which temperature is usually above 100 °C may reduce the stability of the inhibitor. Furthermore, the chemical properties of the melt, for example the pH, might also affect negatively its stability and its efficiency when applied to the soil.

### Summary of the invention

In order to solve, or at least alleviate, the problems mentioned above, the present disclosure provides a novel method for producing an ammonium-based solid, particulate composition comprising an additive.
In a first aspect, the present disclosure provides a method for producing an ammonium-based solid, particulate composition comprising an additive in a plant comprising a liquid section and a solid section comprising a particulation unit and an effluent gas treatment unit comprising a scrubber, a scrubber solution storage container and optionally a scrubber evaporator, the method comprising the steps of: a) preparing a melt comprising an ammonium salt in the liquid section of the plant; b) particulating the melt prepared in step a) in the particulation unit thereby obtaining an ammonium-based solid, particulate composition and an effluent gas comprising ammonia; c) preparing an aqueous scrubbing solution; d) treating the effluent gas comprising ammonia from the particulation unit with the aqueous scrubbing solution prepared in step c) in the scrubber of the effluent gas treatment unit thereby producing a scrubber solution; e) storing the scrubber solution produced in step d) in the scrubber solution storage of the effluent gas treatment unit; f) optionally, concentrating the scrubber solution from the scrubber solution storage container in the scrubber evaporator thereby obtaining a concentrated scrubber solution; and g) adding the scrubber solution obtained from step e) or f) to the melt comprising an ammonium salt; wherein an additive is added in solid form to any one or more of the aqueous scrubbing solution prepared in step c), the scrubber solution in the scrubber solution storage, or the scrubber concentrator.

### Figures

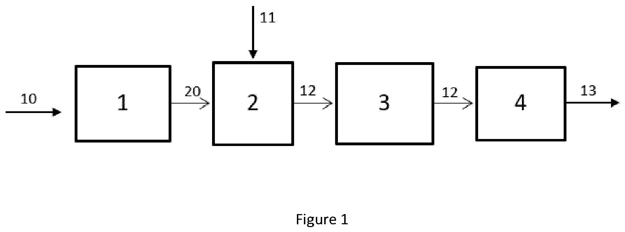

Figure 1 represents the workflow of a method according to the present disclosure.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.
All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the formulation.
In a first aspect, the present disclosure provides a method for producing an ammonium-based solid, particulate composition comprising an additive in a plant comprising a liquid section and a solid section comprising a particulation unit and an effluent gas treatment unit comprising a scrubber, a scrubber solution storage container and optionally a scrubber evaporator, the method comprising the steps of: a) preparing a melt comprising an ammonium salt in the liquid section of the plant; b) particulating the melt prepared in step a) in the particulation unit thereby obtaining an ammonium-based solid, particulate composition and an effluent gas comprising ammonia; c) preparing an aqueous scrubbing solution; d) treating the effluent gas comprising ammonia from the particulation unit with the aqueous scrubbing solution prepared in step c) in the scrubber of the effluent gas treatment unit thereby producing a scrubber solution; e) storing the scrubber solution produced in step d) in the scrubber solution storage of the effluent gas treatment unit; f) optionally, concentrating the scrubber solution from the scrubber solution storage container in the scrubber evaporator thereby obtaining a concentrated scrubber solution; and g) adding the scrubber solution obtained from step e) or f) to the melt comprising an ammonium salt; wherein an additive is added in solid form to any one or more of the aqueous scrubbing solution prepared in step c), the scrubber solution in the scrubber solution storage, or the scrubber concentrator.

It was found to be possible to add the additive required in the ammonium-based solid, particulate composition in other locations of the process steps, in particular in aqueous solutions kept at ambient temperatures or at least aqueous solutions with a temperature lower than 100 °C. This allows to increase the stability of the additive, in particular wherein the additive is a nitrification inhibitor. It was found that the additive could be added to any one or more of the aqueous scrubbing solution prepared in step c), the scrubber solution in the scrubber solution storage, or the scrubber concentrator. This approach may require more planification as the additive is introduced indirectly or in a two-step manner in the melt, i.e. first in the scrubber section of the plant and then in the melt.

In a typical plant for producing an ammonium-based solid, particulate composition, the production process start in the liquid section of the plant where a melt comprising an ammonium salt is prepared. This may be achieved in a number of ways known in the art. For example, ammonia gas may be reacted with a composition comprising, or consisting of, an inorganic acid, such as nitric acid, phosphoric acid or sulphuric acid to provide respectively a composition comprising ammonium nitrate, ammonium phosphate or ammonium sulphate. The composition may comprise other components or impurities in addition to the ammonium salt. The composition may be directly directed to the solid section of the plant to be particulated or may have to be further processed before that. For example, it may be necessary to adjust the water content, e.g. reduce it, of the composition comprising the ammonium salt to obtain a melt which may be particulated.

Once a melt comprising an ammonium source is ready to be particulated, it is directed to the solid section of the plant. Herein, the melt may be transformed into an ammonium-based solid, particulate composition by a number of means known in the art. Such particulation means comprise a fluidized bed granulator, a pan granulator, a drum granulator, a prilling tower, a spherodizer, a pugmill, and/or a pastillizer.

The particulation of the melt comprising an ammonium salt is performed on a melt with a temperature above 100 °C, and the ammonium-based solid, particulate composition obtained has a high temperature, often above 60 °C, which needs to be reduced to facilitate its handling. The cooling of the ammonium-based solid, particulate composition is performed by a stream of air which cools down the particles. Furthermore, the particulation step may also require a stream of air to cool the particles and solidify them. These operations produces a stream of air comprising gaseous and solid contaminants, such as ammonia gas. These contaminants must be removed from the stream of air before the air may be released in the atmosphere due to environmental regulations placed on the production plants.

A common system to do so is to use an effluent gas treatment unit comprising at least a scrubber and a scrubber solution storage container. In addition, the effluent gas treatment unit may also comprise a scrubber evaporator. The stream of polluted air is directed through the scrubber which comprises a series of filtering pads. These pads capture the contaminants removing them from the stream of air, and a stream of air depleted of contaminants is obtained at the outlet of the scrubber. In order to capture gaseous contaminants, in particular ammonia, it is common practice to spray the pads with an aqueous scrubbing solution. The aqueous scrubbing solution may be essentially water, but an acid, in particular an inorganic acid, may be added to the aqueous scrubbing solution to improve the efficacy of the scrubber. If the aqueous scrubbing solution consists of water at pH = 7, the capacity of absorbing ammonia will be limited by the solubility of ammonia in water, which is not very high. By adding an acid, in particular an inorganic acid to the aqueous scrubbing solution, the ammonia will react with the acid to form an ammonium salt, which has a very high solubility in water. The aqueous solution sprayed on the pads and now containing the contaminants extracted from the stream of air is collected and directed to a tank, the scrubber solution storage. It is understood that the aqueous solution may be heated up during its residence time in the scrubber, as the stream of air directed into the scrubber may have a temperature above the temperature of the scrubbing solution.

As used herein, the aqueous scrubbing solution refers to the solution that is being sprayed onto the pads of the scrubber; and the scrubber solution refers to the solution that is produced by the scrubber, i.e. it comprises the aqueous scrubbing solution and the contaminants extracted from the stream of air.

Since the scrubbing solution and the scrubber solution are kept at temperatures much lower than a melt comprising an ammonium melt, it was envisaged to add additives required in the production process therein. Furthermore, the pH of the scrubbing solution and the scrubber solution may be carefully adjusted by modifying the amount of acid added to the scrubbing solution, so it may be possible to adapt the pH of the scrubbing and scrubber solutions to the requirements of the additive.

Adding the additive to the aqueous scrubbing solution, the scrubber solution in the scrubber solution storage, or the scrubber concentrator allows to introduce the additive under milder conditions than in the melt. In particular, 3,4-dimethylpyrazole (DMP) is a known nitrification inhibitor which is volatile at high temperatures.

The additive is added to the method in solid form, in particular as a powder, more in particular as a fine powder. When the additive can be provided in solid form, it may be an advantage to add the additive in the same form to the production method to avoid extra costs of preparing a solution in a solvent, organic or water. To improve the solubility of the additive in an aqueous solution such as the scrubber solution, it may be an advantage to add the additive as a fine powder, in particular as a fine powder where the average size of particles do not exceed 100 µm. If the additive comprises larger particles, it may be grinded via a number of ways known in the art to reduce its particle size.

The scrubber solution comprising the additive may be added to the melt comprising an ammonium source in the liquid section of the plant. The scrubber solution may be added to the melt just before the melt is sent from the liquid section to the solid section to be particulated. Alternatively, the scrubber solution may be added to the melt within the liquid section, for example before an evaporation step to adjust the water content of the melt.

In one embodiment, the additive is one or more component selected from the group of nitrification inhibitor, in particular 3,4-dimethylpyrazole or a derivative thereof, or a stabilizer for the nitrification inhibitor, in particular wherein the stabilizer for a nitrification inhibitor is an acidic organic or inorganic compound. It is well known to add a nitrification inhibitor to ammonium-based fertilizer particles. As explained above, the nitrification inhibitor slows down the conversion of ammonium into nitrate and therefore reduces the risk of nitrate leaching or nitrogen losses due to denitrification. 3,4-Dimethylpyrazole (DMP)-based compounds, such as 3,4-dimethylpyrazole phosphate (DMPP), 3,4-dimethylpyrazole-succinic acid (DMPSA), and 3-methylpyrazole are popular nitrification inhibitors due to their efficacy to slow down the nitrification of ammonium, and its commercial availability.

In one embodiment, the nitrification inhibitor is selected from the group of 3,4-dimethylpyrazole or a derivative thereof. As used herein, a derivative comprises a salt thereof, such as DMPP, and a compound where the 3,4-dimethylpyrazole moiety is covalently bound to another organic fragment, such as DMPSA.
In one embodiment, the nitrification inhibitor is selected from the group of DMPP and/or DMPSA.

In order to be effective, the nitrification inhibitor is added to the ammonium-based composition at a level of 0.0001 to 1.0% weight%, in particular 0.02 to 0.5% weight%, more in particular 0.05 to 0.4 weight%, relative to the total weight of the ammonium-based composition. It may not be necessary to use a large amount, i.e. above 1.0 weight% based on the total weight of the composition, of the nitrification inhibitor as the agronomical effect. A high amount may increase the cost of the final product too much to be commercially interesting, and might not give a noticeable improvement compared to a lower amount. Further, some of these compounds may be toxic, and/or difficult to handle, so it may be an advantage to limit the amount of the inhibitor.

It is known that compounds from the group of 3,4-dimethylpyrazole or a derivative thereof, may be prepared in an acidic aqueous solution. For example, US2019/0359538 discloses a mixture comprising DMP and an excess of phosphoric acid, i.e. where the molar ratio of phosphoric acid to DMP is greater than 1. Therefore, it may be an advantage to add DMP or a derivative thereof to the aqueous scrubbing solution, the scrubber solution in the scrubber solution storage, or the scrubber concentrator since the pH of these solutions may be controlled to be below 7. If the additive comprises DMP, the DMP will react with the acid present in the scrubbing or scrubber solutions to form a salt which has a high water solubility and better stability.

Nitrification inhibitors are small organic molecules which may have a limited lifetime when added to ammonium-based, solid compositions. Inhibitors may react with other components present in the composition or simply with ambient light and/or ambient moisture and degrade. Therefore, it may be an advantage to add a component to the ammonium-based composition that can extend the lifetime of the inhibitor during storage and transport. Different nitrification inhibitors may require different types of stabilizers according to the knowledge in the field.

In one embodiment, the acidic organic or inorganic compound is an organic compound comprising a carboxylic group, in particular wherein the acidic organic or inorganic compound is citric acid.

For DMPP, and DMP-based compounds in general, it was found that acidic compounds, in particular organic compounds comprising a carboxylic acid, were suitable at preventing the degradation of the inhibitor in ammonium-based composition. For example, citric acid was found to increase the stability of DMPP when present in ammonium-based solid compositions during storage.

In one embodiment, the acidic organic or inorganic compound is present in the homogeneous, solid, particulate ammonium-based composition at a level of 0.0001 to 1.0 weight%, in particular 0.02 to 0.5 weight%, more in particular 0.05 to 0.3 weight%, relative to the total weight of the composition.

In one embodiment, the additive comprises a DMP-based compound and an acidic organic compound.

In one embodiment, the additive comprises DMPP and an acidic organic compound.

In one embodiment, the additive comprises DMPP and citric acid.

Where the additive comprises two components, for example a nitrification inhibitor and a stabilizer, the two components may be added together to the production process either to the aqueous scrubbing solution, the scrubber solution in the scrubber solution storage, or the scrubber concentrator. It may be easier to add both components at the same stage to facilitate the production process. But it may also be undesirable to do so if the two components have different physical and/or chemical properties that require different handling precautions.

In one embodiment, two additives may be added at separate stages of the production process. For example, the nitrification inhibitor may be added to the scrubbing solution while the stabilizer is added in the scrubber solution storage, or vice-versa. Alternatively, the nitrification inhibitor may be added to the scrubber solution storage and the stabilizer may be added in the melt comprising an ammonium salt.

In one embodiment, the additive is a compound that improves the chemical and/or physical properties of the solid, particulate, ammonium-based composition. These additives are well known in the field, and may be used to obtain a solid composition with improved properties. Fertilizer particles are often stored for extended period of times, from a few weeks to several months, and transported across continents. Particles must satisfy several criteria, in particular particle strength, moisture absorption, and dust formation. It may be necessary to add additives to the production process to ensure that these criteria are met. For example, for compositions comprising ammonium nitrate, magnesium nitrate or aluminum sulphate may be added to the melt to improve the strength of the particles.

In one embodiment, the method comprises the further step of applying a conditioning agent to the homogeneous, solid, particulate, ammonium-based composition. The conditioning agent may be applied as a coating layer, in particular a coating layer comprising a wax, in particular a petroleum wax or a paraffin wax, and an alkyl phosphate ester. It is well known to apply a conditioning agent, for example, in the form of a coating layer, to solid, particulate compositions, to further improve their properties. Hygroscopicity, dustiness are characteristics that may be improved by the addition of such agents. For example, ammonium nitrate-based composition are quite hygroscopic, so it may be an advantage to apply a coating layer that is able to slow down the ate of water absorption by the composition. In particular, it was found that a coating layer comprising a wax, in particular a petroleum wax or a paraffin wax, and an alkyl phosphate ester was beneficial to ammonium nitrate-based compositions.

In one embodiment, the solid, particulate, ammonium-based composition comprises from 40 to 80 weight% of ammonium nitrate, in particular 40 to 75 weight%, more in particular in particular 45 to 75 weight%.

In one embodiment, the solid, particulate, ammonium-based composition comprises from 45 to 80 weight% of ammonium nitrate.

In one embodiment, the solid, particulate, ammonium-based composition comprises from 40 to 80 weight% of ammonium phosphate, in particular 40 to 75 weight%, more in particular in particular 45 to 75 weight%. In one embodiment, the solid, particulate, ammonium-based composition comprises from 45 to 80 weight% of ammonium phosphate.

In one embodiment, the solid, particulate, ammonium-based composition comprises from 40 to 80 weight% of ammonium sulphate, in particular 40 to 75 weight%, more in particular in particular 45 to 75 weight%. In one embodiment, the solid, particulate, ammonium-based composition comprises from 45 to 80 weight% of ammonium sulphate.

Ammonium salts are widely used in agriculture. Common ammonium salts are ammonium nitrate, ammonium phosphate and ammonium sulphate. Ammonium nitrate (NH₄NO₃) is a compound with a high nitrogen content, which supplies nitrogen to crops in two forms: nitrate, which can be absorbed quickly by the crop, and can be considered a fast-action fertilizer, and ammonium which needs to be oxidized to nitrate, and can be considered a slow-action fertilizer. Ammonium phosphate salts, which may comprise mono-ammonium phosphate (NH₄H₂PO₄) and/or di-ammonium phosphate ((NH₄)₂H₂PO₄), comprise two primary nutrients for crops, nitrogen and phosphorus. Ammonium sulphate salts, which may comprise ammonium sulphate ((NH₄)₂SO₄) and/or ammonium bisulphate ((NH₄)HSO₄), also comprise two nutrients required by crops, nitrogen and sulphur).

The solid, particulate composition, may comprise more than one ammonium salt. For example, it may comprise a mixture of ammonium nitrate and ammonium phosphate.

According to one embodiment of the present disclosure, the solid, particulate, ammonium-based composition further comprises one or more compounds selected from the group of calcium nitrate, sodium nitrate, ammonium sulphate nitrate, calcium bis(dihydrogen¬ orthophosphate), super phosphate, triple superphosphate, rock phosphate, potassium sulphate, potassium magnesium sulphate, potassium chloride (MOP), urea potassium salts (UK), elemental sulphur, or mixtures thereof. Any of these compounds added to ammonium produces the ammonium-based fertilizer. These compounds are particularly added to the ammonium-based melt in the mixing unit, mentioned in step (ii) or equivalent.

In particular, to serve as a fertilizer, the average particle size (dp50) of the solid, particulate, ammonium-based composition is between 1.0 mm and 5 cm, preferably between 1.0 mm and 1 cm, preferably between 1.0 and 6.0 mm, preferably between 2.0 and 4.0 mm, preferably between 3.0 and 5.0 mm, preferably between 2.5 and 3.6 mm, as determined by mesh sieve screening.

The solid, particulate, ammonium-based composition may contain elemental sulphur, may be coated with micronutrients or other nutrients, or may be treated in any other way. It may contain any other processing additive, such as granulation additive.

An embodiment of the method according to the present disclosure is disclosed in figure 1. The box 1 represents the granulation unit of a fertilizer plant. A melt composition **10** comprising an ammonium salt, for example ammonium nitrate, is directed to the granulation unit 1, which comprises a fluidized bed granulator. The melt is transformed into a solid, particulate ammonium-based composition. The granulator **1** produces a stream of polluted air **20** comprising ammonia that is directed to a scrubber **2.** The scrubber **2** is supplied with an aqueous scrubbing solution **11** and produces an aqueous scrubber solution **12** comprising an ammonium salt, for example ammonium nitrate, that is directed to the scrubber solution storage **3.** The aqueous scrubber solution is then directed to a scrubber evaporator **4** to produce a concentrated scrubber solution **13.** The scrubber solution **12** and/or the concentrated scrubber solution **13** may added to the melt composition **1.**

## Claims

1. A method for producing an ammonium-based solid, particulate composition comprising an additive in a plant comprising a liquid section and a solid section comprising a particulation unit and an effluent gas treatment unit comprising a scrubber, a scrubber solution storage container and optionally a scrubber evaporator, the method comprising the steps of:
a) preparing a melt comprising an ammonium salt in the liquid section of the plant;
b) particulating the melt prepared in step a) in the particulation unit thereby obtaining an ammonium-based solid, particulate composition and an effluent gas comprising ammonia;
c) preparing an aqueous scrubbing solution;
d) treating the effluent gas comprising ammonia from the particulation unit with the aqueous scrubbing solution prepared in step c) in the scrubber of the effluent gas treatment unit thereby producing a scrubber solution;
e) storing the scrubber solution produced in step d) in the scrubber solution storage of the effluent gas treatment unit; and
f) optionally, concentrating the scrubber solution from the scrubber solution storage container in the scrubber evaporator thereby obtaining a concentrated scrubber solution;
g) adding the scrubber solution obtained from step e) or f) to the melt comprising an ammonium salt;
**characterized in that** an additive is added in solid form to any one or more of the aqueous scrubbing solution prepared in step c), the scrubber solution in the scrubber solution storage, or the scrubber concentrator.

2. The method according to claim 1, wherein the additive is one or more component selected from the group of nitrification inhibitor, in particular 3,4-dimethylpyrazole or a derivative thereof, or a stabilizer for the nitrification inhibitor, in particular wherein the stabilizer for a nitrification inhibitor is an acidic organic or inorganic compound.

3. The method according to claim 1 or 2, wherein the particulation unit is selected from the group of fluidized bed granulator, pan granulator, drum granulator, prilling tower, spherodizer, pugmill, and pastillizer.

4. The method according to any one of claims 1 to 3, wherein the additive is added to the scrubber solution in the scrubber solution storage.

5. The method according to any one of claims 1 to 4, wherein the additive comprises a nitrification inhibitor selected from the group of dicyandiamide (DCD), 2-chloro-6-trichloro¬methyl¬pyridine (nitrapyrin), dimethylpyrazole (DMP)-based compounds, such as 3,4-dimethylpyrazole phosphate (DMPP), 3-methyl¬pyrazole (MP), or 3,4-dimethylpyrazole-succinic acid (DMPSA); 1-H-1,2,4-triazole (TZ); 3-methyl¬pyrazole-1-carboxamide (CMP); 4-amino-1,2,4-triazole (AT, ATC); 3-amino-1,2,4-triazole; 2-cyanimi¬no-4-hydroxy-6- methylpyrimidine (CP); 2-ethylpyridine; ammonium thiosulfate (ATS); sodium thiosulfate (ST); thiophosphoryl triamide; thiourea (TU); guanylthiourea (GTU); ammonium polycarboxylate; ethylene urea; hydroquinone; phenylacetylene; phenyl¬phos¬phoro diamidate; neemcake; calcium carbide; 5-ethoxy-3-trichloromethyl-1,2,4-thiadiazol (etridiazol; terraole); 2-amino-4-chloro-6- methylpyrimidine (AM); 1-mercap¬to-1,2,4-triazole (MT); 2-mercaptobenzothiazole (MBT); 2-sulfanil¬amido¬thiazole (ST); 5-amino-1,2,4-thiadiazole; 2,4-diamino-6-trichloromethyl-s-triazine (CL-1580); N-2,5-di¬chlo¬rophenyl succinanilic acid (DCS); nitroaniline, chloroaniline, and derivatives and salts thereof, in particular wherein the nitrification inhibitor is a DMP-based compound, more in particular wherein the nitrification inhibitor is a salt of 3,4-dimethyl pyrazole, even more in particular wherein the nitrification inhibitor is 3,4-dimethyl pyrazole phosphate (DMPP).

6. The method according to any one of claims 2 to 5, wherein the nitrification inhibitor, in particular a DMP-based compound, is present in the ammonium-based solid, particulate composition at a level of 0.0001 to 1.0 weight%, in particular 0.02 to 0.5 weight%, more in particular 0.05 to 0.3 weight%, relative to the total weight of the ammonium-based solid, particulate composition.

7. The method according to any one of claims 2 to 6, wherein the stabilizer for the nitrification inhibitor is an acidic organic or inorganic compound, in particular an organic compound comprising a carboxylic group, in particular wherein the acidic organic or inorganic compound is citric acid.

8. The method according to any one of claims 2 to 7, wherein the stabilizer for the nitrification inhibitor is present in the ammonium-based solid, particulate composition at a level of 0.0001 to 1.0 weight%, in particular 0.02 to 0.5 weight%, more in particular 0.05 to 0.3 weight%, relative to the total weight of the composition.

9. The method according to any one of claims 1 to 8, wherein the ammonium-based solid, particulate composition comprises from 40 to 80 weight% of ammonium nitrate.

10. The method according to any one of claims 1 to 8, wherein the ammonium-based solid, particulate composition comprises from 40 to 80 weight% of ammonium phosphate.

11. The method according to any one of claims 1 to 10, wherein the ammonium-based solid, particulate composition further comprises one or more compounds selected from the group of calcium nitrate, sodium nitrate, calcium bis(dihydrogen- orthophosphate), super phosphate, triple superphosphate, rock phosphate, potassium sulphate, potassium magnesium sulphate, urea, potassium chloride (MOP), potassium phosphate (SOP), urea potassium salts (UK), elemental sulphur, or mixtures thereof.
